# EUROPEAN PATENT SPECIFICATION

(11) **EP 0 808 094 B1**
(45) Date of publication and mention of the grant of the patent: **21.10.1998**
(21) Application number: 96901883.7
(22) Date of filing: 02.02.1996
(51) Int. Cl.: A01D 17/06, A01D 17/10

(54) **ROOT CROP HARVESTER**
RÜBENERNTEMASCHINE
ARRACHEUSE DE PLANTES RACINES

(30) Priority: 10.02.1995 GB 9502605
(43) Date of publication of application: 26.11.1997
(73) Proprietor: KVERNELAND UNDERHAUG A/S, 4350 Naerbo (NO)
(72) Inventor: ROYNEBERG, Erling, N-4350 Naerbo (NO)
(74) Representative: Orr, William McLean
(86) International application number: GB9600237
(87) International publication number: WO9624240

(56) References cited:
- EP-A- 0 501 590
- FR-A- 1 162 833
- GB-A- 2 077 626
- GB-A- 2 158 738
- GB-A- 2 239 156

## Description

This invention relates to a root crop harvester which comprises a forward crop-digger section, a conveying section arranged to receive material dug-up by said forward section and to convey the material rearwardly while carrying out at least partial separation of stones, clods and soil from the crop so as to deliver at least partly screened crop material to a discharge end of the conveying section, and a roller separator device arranged to receive said material from the conveying section and to carry out further screening of the crop.

It is known to provide a so-called roller separator, (roller table or axial cleaning rollers), to provide a final cleaning action on a root crop, such as potatoes, and which comprises a set of parallel rollers closely spaced apart from each other to define spaces therebetween through which separated stone and soil can fall under gravity while the crop remains supported by the roller surfaces. Usually, the rollers are made of rubber, or are clad with rubber sleeves, to provide gentle handling of the crop and thereby to minimise damage to the crop, and at least some of the rollers usually have spiral "flights" which assist in conveying the crop axially of the rollers to a discharge end of the rollers, and also to separate haulm from potatoes.

The rollers may also be inclined downwardly at a small angle to the horizontal from their rotary mountings at one end, so that gravity action also assists the movement of the crop along the lengths of the rollers. At the discharge end of the rollers, there may be arranged a discharge conveyor e.g. an elevator leading to a temporary storage tank or to a discharge point at which a trailer may be located to receive the crop from the harvester.

Root crop harvesters or this type may be used to harvest potatoes, or other root crops, and the cleaning / screening action of the harvester separates unwanted material from the crop by the way in which the dug-up material is handled, and which usually involves both a screening action, and also a shaking action, so that small stones can become readily separated from the crop, and also soil and clods, and in addition the shaking action promotes separation of soil which is adhering to the crop.

It is known from GB 2 239 156 to provide a roller separator table in which the angle of inclination of the table can be adjusted, automatically, or under manual control, in order to vary the residence time during which the material discharged from the conveyor section undergoes treatment by the rollers of the separator table, so as to suit different soil conditions.

In the case of heavy soils i.e. clay, it may be desirable to increase the residence time by reducing the slope of the table to the horizontal, whereas in the case of light soils e.g. sandy soils, it may be advantageous to increase the slope of the roller table so that the treatment time of the crop is reduced.

However, while the use of a roller separator table has proved to be a significant advance in the cleaning of root crops (and which enables conventional use of a manually operated "picking table" to be omitted), the means of adjustment of the roller table results in the crop being exposed to cleaning action substantially throughout the lengths of the rollers, in that the conveyor section normally delivers the partly cleaned crop material to the roller table near to the upper ends of the rollers. While it is true that adjustment of the angle of the roller table will alter the residence time of contact of the crop with the surfaces of the rollers, this does not alter the area of the rollers which are contacted by the crop as it moves along the lengths of the rollers while final cleaning takes place.

Therefore, in the case of a sandy soil, (even with a relatively short residence time), there will still be substantial area contact with the surfaces of the rollers, and in the presence of sandy soil, this will be an abrasive contact with the crop which is liable to damage the skin of the crop, or to wear away the skin altogether and even into the edible material of the crop, which results in an inferior product which at best is unappealing to customers, and at worst which is seriously damaged so as to be unmarketable. Regardless of how serious the damage, the potential sales value of the product is reduced, which represents a significant loss of revenue.

The invention therefore seeks to provide a different means for adjustment of the discharge of material from the conveying section to the roller separator, which can be easily carried out to suit different soil conditions, and yet in a way which minimises damage being done to the crop by the harvester.

According to the invention there is provided a root crop harvester which comprises:
a forward crop-digger section;
a conveying section arranged to receive material dug-up by said forward section and to convey the material rearwardly to a discharge position while carrying out at least partial separation of stones, clod and soil from the crop, and a roller separator device arranged to receive material from the conveying section and to carry out further cleaning of the crop;
   characterised by adjustment means which allows adjustment of said discharge position relative to the roller separator device.

By this simple means, the proportion of length of each roller of the roller separator device which is engaged by the partly screened crop material can be varied to suit soil conditions, so that for heavy (clay) conditions, the maximum length of each roller of the separator device may be utilised to give maximum residence time and area contact between the roller surfaces and the material, whereas for very light soils, the length of each roller which can be engaged can be considerably reduced. Indeed, for certain conditions, it may be desirable to avoid contact altogether between the material discharged by the conveying section and the roller separator device.

Therefore, in one preferred arrangement, the conveying section includes a conveyor having a discharge end which can be adjusted lengthwise of the conveyor whereby to permit the linear proportion of each roller of the separator device which is contacted to vary between zero i.e. total by-pass of the separator device, and 100% i.e. contact substantially throughout the length of each roller of the separator device.

The conveying section preferably includes a forward conveyor / shaker device and which may take the form of a travelling set of transverse rods or bars (a sieving or screening web) well-known for use in potato harvesters, and in which the web follows an upwardly and rearward path from the forward digger section to a return end around which the rods of the web are taken before following a lower return path to the digger section. The conveyor with the adjustable discharge end is arranged to receive the partly screened material from the web, and then conveys this material to co-operate with the roller separator device in a controlled adjusted manner as referred to above.

The conveyor with the adjustable discharge end may comprise an endless belt which is taken over a series of horizontally and vertically spaced rollers, to define a required path of travel for the material which is taken from the forward conveyor / shaker section to a discharge position of co-operation with the roller separator device.

The travelling set of transverse rods or bars, usually known as a screen web or sieving web, conveys the dug-up material e.g. potatoes, small stones and clods of soil, upwardly and rearwardly, and exert a shaking action on the material so that the crop becomes at least partly cleaned, while the separated material falls downwardly under gravity through the spaces between the rods. The web then delivers the partly screened crop to the conveyor, and which in one embodiment comprises an endless conveyor belt. However, it should be understood that many other types of "conveying means" may be provided, located along the path of the material to the roller separator, i.e. immediately downstream of the discharge end of the web, and may take other forms, such as a downwardly inclined guide plate, a vibrating plate, or set of parallel forks or bars along which the material is conveyed.

Regardless of the construction used to provide the conveyor means, the discharge end thereof is adjustable relative to the underlying roller separator, so as to enable variation in the discharge position of the material onto the rollers of the roller separator. Conveniently, this relative adjustment is achieved by providing a means for adjusting the position of the discharge end of the conveyor means, in which case the rollers of the roller separator remain at a fixed position relative to the longitudinal axis of the harvester. However, it is within the scope of this invention for the discharge end of the conveyor means to remain fixed, relative to the axis of the harvester, whereas the roller separator is mounted in such a way as to be adjustable lengthwise relative to the axis of the harvester, whereby to cause relative adjustment in the position of discharge of material relative to the rollers.

The rollers of the roller separator are preferably mounted at one end, namely their rotary drive input end, so as to extend downwardly therefrom at a gentle angle of inclination to the horizontal, and if desired means may be provided to vary this angle, whereby to vary the residence time of crop on the surface of the rollers as the crop moves (under gravity action combined with rotation of the rollers) towards the lower discharge ends of the rollers.

Preferably, a transversely extending and underlying conveyor is provided in the harvester, extending generally perpendicular to the direction of travel, and which conveys the cleaned crop laterally of the machine to a temporary storage tank, or to an elevator which can laterally discharge the crop into a trailer travelling alongside the harvester.

The way in which the rollers of the roller separator are mounted may be such that the rollers extend forwardly relative to their rotary mountings i.e. in an opposite direction to the direction of travel of material on the travelling web and the conveyor means. However, in an alternative arrangement, the roller separator may be located further inboard of the rear end of the harvester, and extend downwardly and rearwardly to a discharge position above the laterally extending discharge conveyor.

In a further preferred embodiment, the means of adjustment of the discharge position may be obtained by providing an adjustable conveying surface above the roller separator e.g. a set of transversely extending guide rollers, and which can be adjusted to vary the extent of coverage of the roller separator to meet requirements. Thus, the length of contact with the rollers of the roller separator may be varied as required e.g. between 0% and 100%.

The guide rollers may be replaceably mounted in respective rotary mountings, and one or more can be readily installed, or removed, to vary the discharge position accordingly.

Preferred embodiments of root crop harvester according to the invention will now be described in detail, by way of example only, with reference to the accompanying drawings, in which:
Figure 1 is a schematic side view of a first embodiment of root crop harvester according to the invention, and in the form of a potato harvester;
Figure 2 is a plan view corresponding to Figure 1;
Figure 3 is a side view of a second embodiment of root crop harvester according to the invention; and
Figure 4 is a side view of a third embodiment of the invention.

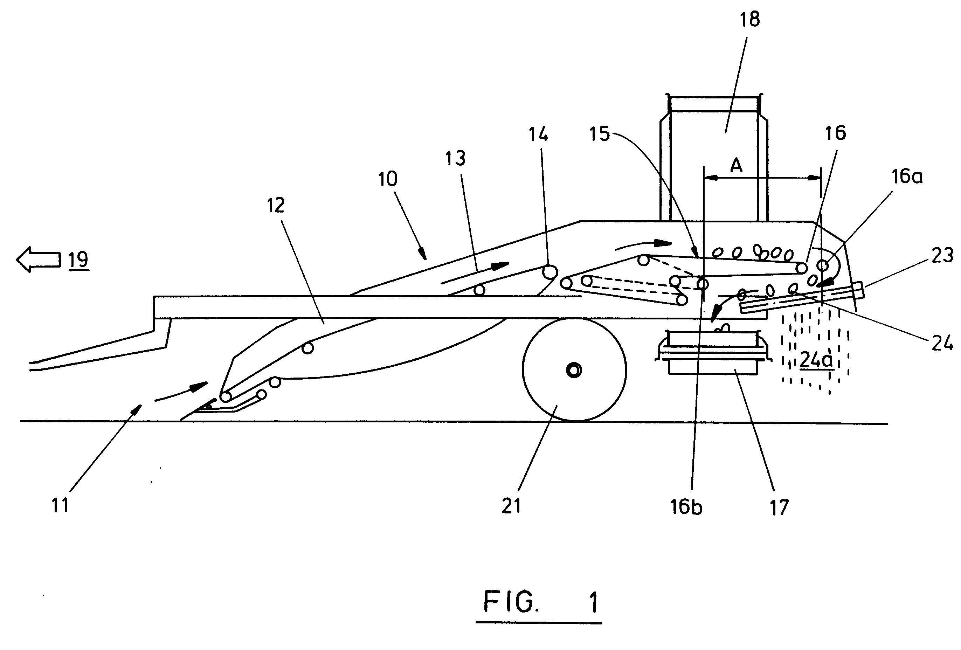

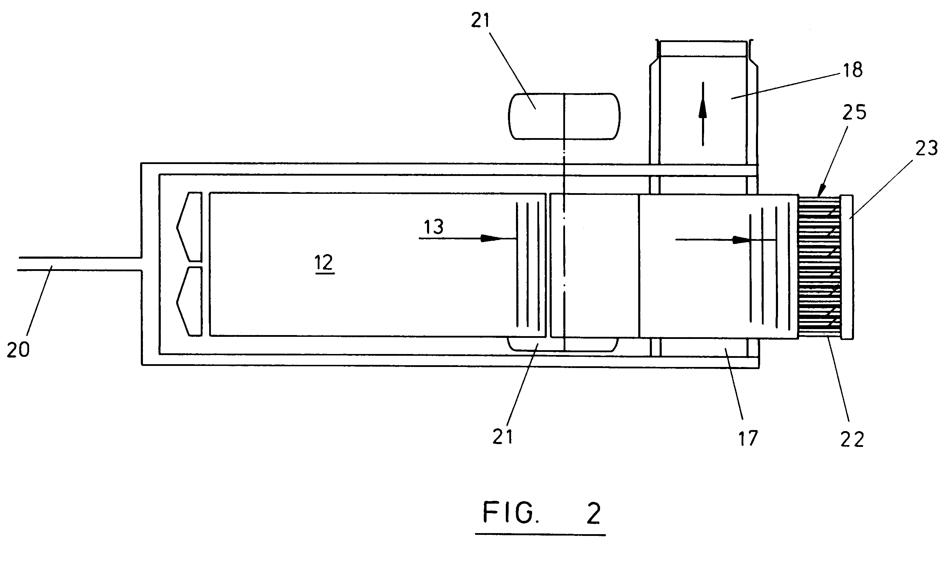

Referring first to Figures 1 and 2 of the drawings, and by way of example only, there will be described a root crop harvester in the form of a potato harvester. The harvester is designated generally by reference 10, and has a forward crop-digger section 11 which digs-up the crop, together with stones, soil clods, as well as soil adhering to the crop. The construction of the crop digger section 11 can be of any well-known design in the form of a share, and therefore is not shown or described in detail herein.

A conveyor section is arranged to receive material dug-up by the forward section 11, and to convey the material rearwardly to a discharge end, while carrying out at least partial separation of stones, clods and soil from the crop. The conveyor section is composed of two separate components, namely a travelling web 12 of transversely extending rods, which function as a screening or sieving web, in known manner, and which conveys the dug-up material upwardly and rearwardly in the direction of the arrow 13, to an upper discharge end 14 of the travelling web. The rods extend perpendicular to the direction of motion 13, and are spaced apart laterally to define gaps through which soil and small stones can pass downwardly under gravity, after separation from the potato crop which remains carried by the rods in the direction 13.

Downstream of travelling web 12, there is arranged a conveyor means designated generally by reference 15, and which receives the partly cleaned crop material from discharge end 14, and conveys this material to rearward discharge end 16.

A roller separator 25 is arranged to receive the material from discharge end 16 of the conveyor means 15, and which carries out further cleaning of the crop, prior to downward discharge onto an underlying transversely extending conveyor 17. Conveyor 17 can convey the now fully cleaned crop laterally to a temporary storage tank (not shown), or, as illustrated, to an elevator 18 which can raise the crop and then discharge it laterally into a trailer travelling alongside the harvester.

The harvester 10 is propelled in the direction of the arrow 19 shown in Figure 1 by a tractor or other propelling vehicle pulling on draw bar 20, and a wheel set 21 allows the harvester 10 to be trailed behind the tractor and with the digging depth of digger section 11 set at any required level.

The roller separator comprises a series of parallel driven rollers 22, arranged side by side, and driven via rotary couplings at the upper ends of the rollers at upper and rear end 23 of the separator 25. As can be seen in Figure 1, the rollers 22 slope gently downwardly from upper end 23, and this promotes downward movement of crop e.g. potatoes 24, as shown. In addition, rollers 22, which are made of rubber, or clad with a rubber sleeve, and preferably are provided with spiral flights, which, upon rotation of the rollers, further assist in the conveyance of the crop 24 along the lengths of the rollers. During this treatment by the rollers 22, the crop undergoes final cleaning action, in which soil clods, and soil adhering to the crop, become separated from the crop and pass downwardly under gravity through the spaces between adjacent rollers 22, as shown by reference 24 in Figure 1. If desired, the angle of inclination of the rollers 22 to the horizontal can be arranged to be adjustable, either automatically or under manual control, to vary the residence time of engagement between the material and the rollers surfaces.

The discharge end 16 of conveyor means 15 is shown in full lines in Figure 1 in an intermediate position of adjustment relative to the underlying rollers of the roller separator 25, and the discharge end 16 can be adjusted between a maximum position, as shown by reference 16a, and a minimum position shown by reference 16b. The distance A which separates the maximum and minimum positions of adjustment 16a and 16b represents the degree of adjustment of the discharge end 16 which can be obtained, according to soil conditions. By means of this adjustment possibility of the discharge end 16, the proportion of the length of each roller 22 which is engaged by the partly screened material can be varied to suit soil conditions. Thus, for heavy (clay) conditions, the maximum length of each roller 22 of the separator 25 may be utilised to give maximum residence time and area contact between the roller surfaces and the material, i.e. for discharge positions shown by reference 16a in Figure 1. However, for very light soils, the length of each roller 22 which can be engaged can be considerably reduced. Indeed, for certain conditions e.g. very sandy soil, it may be desirable to avoid contact altogether between the material discharged from conveyor means 15 and the roller separator 25. This minimum adjusted position i.e. of 0% contact with the rollers of the separator 16, is effectively a by-pass position, in which the crop passes directly from conveyor means 15 to the lateral discharge conveyor 17.

Therefore, the lengthwise adjustment of the discharge end 16 of the conveyor means 15 permits variations in the linear proportion of contact with each roller 22 of the roller separator 25 i.e. between total by-pass of the separator, and 100% i.e. contact with each roller substantially throughout its length.

The illustrated embodiment therefore provides, by simple means, a way of adjusting the discharge position of material from the conveyor means 15, and in use of an endless belt to form the conveyor means 15, it is a simple matter to move at least some of the transfer rollers which guide the movement of the endless belt, to take up any desired configuration, to achieve the required adjustment of the position of the discharge end 16. When, for example, crop is being harvested from very light or sandy soil conditions, it is highly desirable to avoid contact altogether with the roller separator 25, since even a short residence time of contact with the roller 22 can result in abrasion damage to the skin of the potato and possibly also into the edible part of the crop.

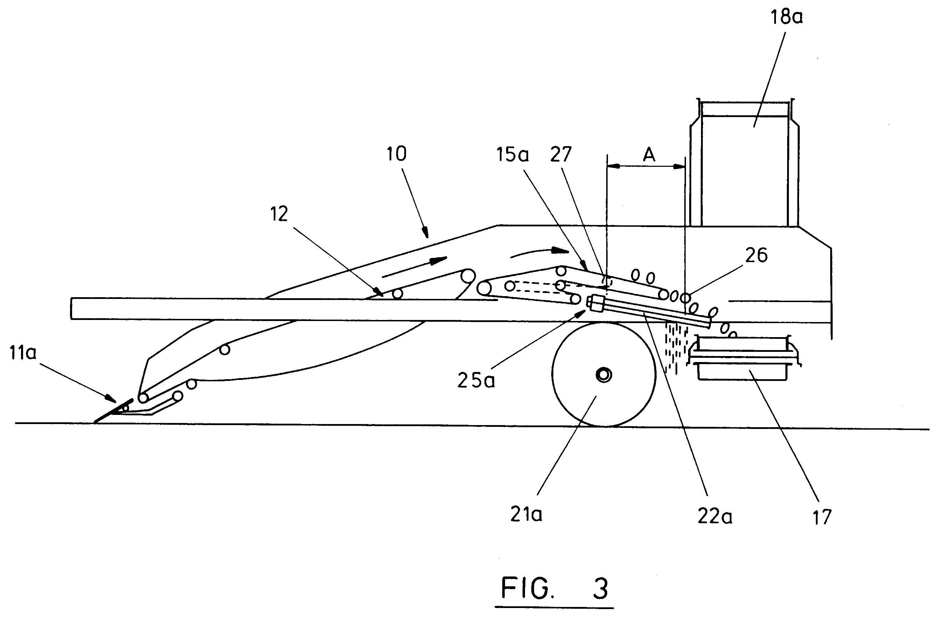

In the embodiments shown in Figures 1 and 2, the roller separator 25 is mounted at the rear end of the harvester, and with the rollers 22 projecting forwardly and downwardly from the rotary input ends 23 i.e. in an opposite direction to the direction of travel 13 of the crop over travelling web 12 and conveyor means 15. However, the separator 25 may have its mounting, and direction of extent reversed, as shown in the embodiment of Figure 3, in which roller separator 25a is mounted inboard of the rear end of the harvester. Parts corresponding with those already described are given the same reference numerals, but with addition of the letter a. The two extreme positions of adjustment of conveyor means 15a are shown by references 26 and 27, and in this case retracted position 27 represents the position of maximum contact between the discharged material and the rollers 22a of the roller separator 25a, whereas extended position 26 represents a position in which there is a very small proportion of length contact with the rollers 22a, prior to discharge onto the discharge conveyor 17a. However, if required, means may be provided to adjust position 26 to a still further extended position, whereby material discharged from conveyor means 15a can pass directly onto the discharge conveyor 17a, and thereby by-passing the roller separator 25a altogether.

In Figures 1 and 2, the illustrated conveyor means 15 and 15a comprises an endless conveyor belt type of arrangement. However, many other different types of conveyor means may be used, and not necessarily a travelling conveyor type arrangement. By way of example, the conveyor means may comprise an inclined guide plate which allows the material conveyed on it to move under gravity action. Alternatively, a vibratory plate or vibratory arrangement of rods may be provided. Whatever arrangement is provided, it must be capable of imparting movement to the partly cleaned crop material discharged by the sieving web 12, 12a, and also have an adjustable discharge end to allow the discharge position to be varied relative to the roller separator. As mentioned above, this adjustment may be between one extreme in which there is contact with the roller separator virtually throughout the lengths of each roller, to another extreme position in which there is no contact at all with the roller separator, which is totally by-passed, with the material passing directly to the discharge conveyor 17, 17a.

Furthermore, while the preferred means of adjustment is obtained by providing for adjustment of the discharge end of the conveyor means 15, and to leave the roller separator fixed longitudinally relative to the harvester, in some circumstances it may be desirable to reverse these roles i.e. for the conveyor means 15, 15a to be longitudinally fixed, and for means, being provided to permit longitudinal adjustment of the entire roller separator.

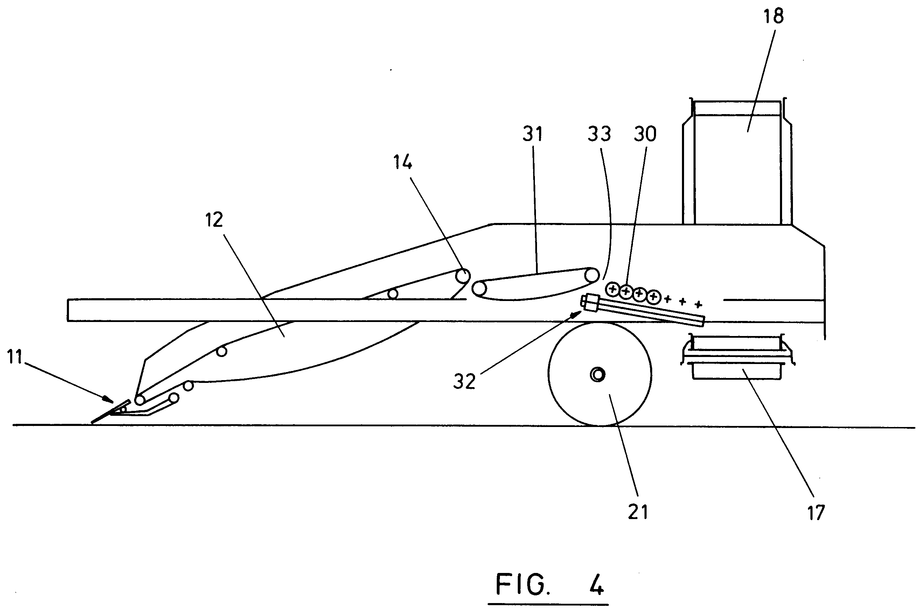

Referring now to Figure 4 of the drawings, there is shown a further embodiment of the invention, with an alternative means of adjustment of the discharge position relative to the roller separator. Parts corresponding with those already described are given the same reference numerals, and will not be described in detail again. In this embodiment, an adjustable conveying surface is arranged above a roller separator 32, and which can be adjusted to vary the extent of coverage of the rollers of the separator 32 to meet requirements. Thus, the length of contact with the rollers of separator 32 may be varied as required e.g. between 0% and 100%.

The travelling web 12 elevates and partly cleans the material dug up by forward section 11, and delivers it to discharge end 14, and an endless transfer belt 31 (or any other suitable conveyor means) delivers this material rearwardly to a position above roller separator 32. However, at the discharge end 33 there is arranged a set of transversely extending guide rollers 30, which are replaceably mounted in respective rotary mountings and one or more of which can be readily installed or removed, to vary the discharge position accordingly. Evidently, when all seven of the illustrated mounting locations have guide rollers 30 mounted thereon, the material discharged by endless conveyor belt 31 at discharge end 33 will pass directly to the discharge conveyor 17, and without coming into contact with the rollers of the roller separator 32. However, if all of the guide rollers 30 are removed, the material discharged at discharge position 33 will fall downwardly under gravity onto the rollers of the roller separator 32, and remain in contact with these rollers substantially throughout the lengths thereof, to undergo final cleaning.

## Claims

1. A root crop harvester (10) which comprises:
a forward crop-digger section (11);
a conveying section (12, 15) arranged to receive material dug-up by said forward section (11) and to convey the material rearwardly to a discharge position (16) while carrying out at least partial separation of stone, clod and soil from the crop, and a roller separator device (25) arranged to receive material from the conveying section (12, 15) and to carry out further cleaning of the crop;
characterised by adjustment means which allows adjustment of the discharge position (16) relative to the roller separator (25, 25a).

2. A harvester according to Claim 1 characterised in that the conveying section (12, 15) includes conveyor means (15) having a discharge end (16) which is longitudinally adjustable relative to the general axis of the harvester in order to vary the position of the discharge end (16) relative to the roller separator (25, 25a).

3. A harvester according to Claim 2, characterised in that the discharge end (16) is adjustable relative to the roller separator (25, 25a) between one position (16a) of adjustment in which there is maximum contact with the surfaces of the rollers (22) of the roller separator (25) suitable for heavy soil conditions, and a further adjusted position (16b) in which there is a reduced length of contact with the rollers of the roller separator.

4. A harvester according to Claim 3 characterised in that the discharge end (16) is adjustable to an extreme position in which there is no contact with the rollers (22) of the roller separator (25), which is effectively by-passed.

5. A harvester according to any one of Claims 2-4, characterised in that said conveying section includes an endless conveyor (15, 15a) having transfer rollers to guide the endless path of the conveyor belt, and in which at least some of the rollers are adjustable to permit adjustment of the discharge end (16) between a maximum position (16a) and a minimum position (16b) of adjustment relative to the roller separator (25, 25a).

6. A harvester according to any one of Claims 1 to 4, characterised in that the conveying section comprises a forward sieving web (12) having an upper discharge end (14), and a conveyor means (15) arranged to receive partly cleaned crop material from the discharge end (14) of the sieving web (12).

7. A harvester according to Claim 6, characterised in that said conveyor means (15) comprises an endless conveyor (15); a set of removable guide rollers (30) arranged above the roller separator (32), a guide plate, a vibratory plate; vibratory rods or vibratory forks.

8. A harvester according to any one of the preceding Claims and in the form of a potato harvester.

## Patentansprüche

1. Hackfruchterntemaschine (10), bestehend aus :
- einem Vorwärtserntebagger-Abschnitt (11);
- einem Förderabschnitt (12, 15), der so angeordnet ist, daß er das von dem genannten Vorwärts-Abschnitt (11) hochgebaggerte Material aufnimmt und das Material in rückwärtiger Richtung zu einer Entladeposition (16) befördert und dabei zumindest eine teilweise Trennung der Steine, Erde und Schmutz von dem Erntegut ausführt, sowie
- einer Rollentrennvorrichtung (25), die so angeordnet ist, daß sie das Material von dem Förderabschnitt (12, 15) aufnimmt und eine weitere Säuberung des Ernteguts ausführt,
**gekennzeichnet durch** ein Einstellmittel, das das Verstellen der Entladeposition (16) relativ zu dem Rollenseparator (25, 25a) ermöglicht.

2. Erntemaschine nach Anspruch 1,
**dadurch gekennzeichnet, daß** der Förderabschnitt (12, 15) aus einen, Fördermittel (15) mit einem Entladeende (16) besteht, das in der Länge relativ zu der Hauptachse der Erntemaschine verstellbar ist, um die Position des Entladeendes (16) zu dem Rollenseparator (25, 25a) zu verändern.

3. Erntemaschine nach Anspruch 2,
**dadurch gekennzeichnet, daß** das Entladeende (16) zu dem Rollenseparator (25, 25a) zwischen einer Einstellposition (16a), bei der maximaler Kontakt mit den Flächen der Rollen (22) des Rollenseparators (25) besteht, der bei schweren Böden geeignet ist, und einer weiteren Einstellposition (16b), bei der der Kontakt mit den Rollen des Rollenseparators über eine verringerte Länge besteht.

4. Erntemaschine nach Anspruch 3,
**dadurch gekennzeichnet, daß** das Entladeende (16) in einer Extremposition eingestellt werden kann, bei der keinerlei Kontakt mit den Rollen (22) des Rollenseparators (25) besteht, der vollkommen umgangen wird.

5. Erntemaschine nach einem der Ansprüche 2 bis 4,
**dadurch gekennzeichnet, daß** der genannte Förderabschnitt aus einem Endlosförderer (15, 15a) besteht, der Transferrollen aufweist, die die Endlosbann des Förderbandes führen, und bei dem zumindet einige der Rollen verstellbar sind, um ein Verstellen des Entladeendes (16) zwischen einer Maximaleinstellposition (16a) und einer Minimaleinstellposition (16b) zu dem Rollenseparator (25, 25a) zu ermöglichen.

6. Erntemaschine nach einem der Ansprüche 2 bis 4,
**dadurch gekennzeichnet, daß** der Förderabschnitt einen Vorwärts-Sieblaufsteg (12) mit einem oberen Entladeende (14) sowie ein Fördermittel (15), das dergestalt angeordnet ist, daß es das teilweise gesäuberte Erntematerial von dem Entladeende (14) des Sieblaufstegs (12) aufnimmt, aufweist.

7. Erntemaschine nach Anspruch 6,
**dadurch gekennzeichnet, daß** das genannte Fördermittel (15) einen Endlosförderer (15), einen Satz auswechselbarer Führungsrollen (30), die über dem Rollenseparator (32) angeordnet sind, eine Führungsplatte, eine Rüttelplatte, Rüttelstangen oder Rüttelgabeln aufweist.

8. Erntemaschine nach einem der vorherigen Ansprüche und in der Form einer Kartoffelerntemaschine bestehend.

## Revendications

1. Récolteuse (10) de cultures à racines comprenant :
une section avant (11) d'arrachage des cultures ;
une section de transport (12, 15) agencée pour recevoir la matière arrachée par ladite section avant (11) et pour transporter la matière vers l'arrière en direction d'une position de décharge (16) tout en effectuant une séparation au moins partielle des pierres, des mottes et de la terre depuis la culture, et un dispositif séparateur à rouleaux (25) agencé pour recevoir ladite matière depuis la section de transport (12, 15) et pour effectuer un nouveau nettoyage de la culture ;
caractérisée par des moyens de réglage qui permettent un réglage de la position de décharge (16) par rapport au dispositif séparateur à rouleaux (25, 25a).

2. Récolteuse selon la revendication 1, caractérisée en ce que la section de transport (12, 15) comprend des moyens de transport (15) ayant une extrémité de décharge (16) qui est réglable longitudinalement par rapport à l'axe général de la récolteuse afin de faire varier la position de l'extrémité de décharge (16) par rapport au séparateur à rouleaux (25, 25a).

3. Récolteuse selon la revendication 2, caractérisée en ce que l'extrémité de décharge (16) est réglable par rapport au séparateur à rouleaux (25, 25a) entre une position (16a) de réglage dans laquelle un contact maximal s'établit avec les surfaces des rouleaux (22) du séparateur à rouleaux (25) convenant pour des sols lourds, et une autre position réglée (16b) dans laquelle s'établit une longueur réduite de contact avec les rouleaux du séparateur à rouleaux.

4. Récolteuse selon la revendication 3, caractérisée en ce que l'extrémité de décharge (16) est réglable jusqu'à une position extrême dans laquelle aucun contact n'a lieu avec les rouleaux (22) du séparateur à rouleaux (25), qui est effectivement évité.

5. Récolteuse selon l'une quelconque des revendications 2 à 4, caractérisée en ce que ladite section de transport comprend un convoyeur sans fin (15, 15a) ayant des rouleaux de transfert pour guider la trajectoire sans fin de la bande de transport, et dans laquelle au moins certains des rouleaux sont réglables pour permettre un réglage de l'extrémité de décharge (16) entre une position maximale (16a) et une position minimale (16b) de réglage par rapport au séparateur à rouleaux (25, 25a).

6. Récolteuse selon l'une quelconque des revendications 1 à 4, caractérisée en ce que la section de transport comprend une bande de tamisage avant (12) ayant une extrémité de décharge supérieure (14), et des moyens de transport (15) agencés pour recevoir de la matière de culture partiellement nettoyée depuis l'extrémité de décharge (14) de la bande de tamisage (12).

7. Récolteuse selon la revendication 6, caractérisée en ce que lesdits moyens de transport (15) comprennent un convoyeur sans fin (15) ; un jeu de rouleaux de guidage amovibles (30) agencés au-dessus du séparateur à rouleaux (232), une plaque de guidage, un plateau vibrant ; des tiges vibrantes ou des fourches vibrantes.

8. Récolteuse selon l'une quelconque des revendications précédentes, de la forme d'une récolteuse de pommes de terre.
